# EUROPEAN PATENT SPECIFICATION

(11) **EP 3 438 374 B1**
(45) Date of publication and mention of the grant of the patent: **13.07.2022**
(21) Application number: 17775312.6
(22) Date of filing: 29.03.2017
(51) Int. Cl.: E04F 15/02, B32B 5/18, B32B 7/02, B32B 3/06, B32B 7/022, B32B 7/12, B32B 9/02, B32B 9/04, B32B 21/02, B32B 21/04, B32B 27/06, B32B 27/30, B32B 27/32, E04F 15/10

(54) **DECORATIVE MATERIAL**
ZIERMATERIAL
MATÉRIAU DÉCORATIF

(30) Priority: 29.03.2016 JP 2016065569
(43) Date of publication of application: 06.02.2019
(73) Proprietor: Dai Nippon Printing Co., Ltd., Shinjuku-ku Tokyo 1628001 (JP)
(72) Inventor: SHIMIZU, Masafumi, Tokyo 162-8001 (JP); DOI, Kouji, Tokyo 162-8001 (JP)
(74) Representative: Müller-Boré & Partner Patentanwälte PartG mbB
(86) International application number: PCT/JP2017/013083
(87) International publication number: WO 2017/170778

(56) References cited:
- WO-A1-2014/129081
- JP-A- H0 828 015
- JP-A- H10 317 655
- JP-A- H11 100 981
- JP-A- H11 138 704
- JP-A- 2004 324 401
- JP-A- 2006 123 512
- JP-A- 2007 046 302
- JP-A- 2008 180 077
- JP-A- 2013 083 139
- JP-U- S60 166 717
- US-A1- 2006 130 416

## Description

### Technical Field

The present invention relates to a decorative material.

### Background Art

Materials formed by bonding a decorative sheet having a natural-wood design to the upper surface of a wooden base material (e.g., a broadleaf tree lauan plywood) that is obtained from high-quality raw wood, via an adhesive, are known as wood-based decorative plates conventionally used as decorative materials for house floors. As such sheet-bonded flooring materials, various products having improved scratch resistance, products having highly acclaimed designs, etc., are available, and widely used as housing members.

However, conventional wood-based decorative materials are too hard, and have problems of easily tiring the user and being uncomfortable for sitting. In recent years, decorative materials having the shock-absorbing properties (softness) etc. of a cork sheet have been developed by laminating a cork sheet between a wooden base material and a decorative sheet. On the basis of their softness, such decorative materials are considered to have a good walking feel and sitting comfort.

For example, Patent Literature (PTL) 1 discloses "a wooden flooring material comprising a cork layer and a resin sheet layer laminated in this order on the surface of a rectangular wooden base material (Claim 1)." PTL 1 discloses that "after flooring, the resulting floor can have the shock-absorbing properties (cushion properties) and heat-retaining properties of the cork material, as well as the comfort of cork material provided to residential environments" (paragraph [0020]).

However, although the wooden flooring material of PTL1 has an improved walking feel and sitting comfort, it has new problems such that the scratch resistance is reduced, and influences of unevenness (surface rippling or non-flat uneven condition), knots, etc., of the wooden base material appear on the surface of the wooden flooring material.

Patent Literature (PTL) 2 discloses a "decorative sheet for floor material comprising a decorative sheet intermediate having one or more layers laminated on the front surface of a base material sheet, and a synthetic resin backer layer formed on the back surface of the base material sheet, wherein the synthetic resin layer backer layer is formed from two or more layers including a hard layer and a soft layer, and at least the layer in contact with the base material sheet is a hard layer."

Since the decorative sheet for floor material disclosed in PTL 2 comprises a synthetic resin backer layer formed from two or more layers including a hard layer and a soft layer, it can exhibit shock-absorbing properties while maintaining scratch resistance. However, because of increased consumer demand in recent years, decorative materials have been desired to have further improvement in walking feel and sitting comfort.

Patent Literature (PTL) 3 is directed to a sheet material for floors of buildings and discloses a sheet material for floors of buildings in which a cork board is applied to the upper surface of a foam sheet. PTL 3 also discloses an embodiment in which the above sheet material for floors of buildings is adhered to the upper surface of a plywood. Thus, PTL 3 discloses a flooring material in which a plywood, a foam sheet, and a cork are laminated in this order.

### Citation List

### Patent Literature

PTL 1: JP2004-324401A
PTL 2: JP2010-106654A
PTL 3: JP S60 166717 U

### Summary of Invention

### Technical Problem

As described above, conventional decorative materials did not have excellent comfort (walking feel, sitting comfort, etc.) as well as scratch resistance when used as decorative materials for floors.

Accordingly, an object of the present invention is to provide a decorative material having excellent comfort (walking feel, sitting comfort, etc.) as well as scratch resistance when used as a decorative material for floors.

### Solution to Problem

To achieve the above object, the present inventors conducted extensive research. As a result, they found that the object can be achieved by laminating the first layer, the second layer, and the third layer made of synthetic resin on or above the base material layer in order of increasing hardness, and thus accomplished the invention.

Specifically, the present invention relates to a decorative material defined in claim 1. Further aspects of the inventions are set out in dependent claims 2-4.

### Advantageous Effects of Invention

The decorative material of present claim 1 comprises, on or above a base material layer, the first layer, the second layer, and the third layer made of synthetic resin in order from the base material layer side. By satisfying the condition of H1<H2<H3 wherein H1 is the hardness of the first layer, H2 is the hardness of the second layer, and H3 is the hardness of the third layer, the decorative material of the present invention ensures excellent comfort (walking feel, sitting comfort, etc.) as well as scratch resistance when used as a decorative material for floors. The decorative material of the present invention can be suitably used as both an interior material and an exterior material of a decorative material for floors.

### Brief Description of Drawings

Fig. 1 is a cross-sectional schematic diagram illustrating an embodiment of the decorative material of the present invention.
Fig. 2 is a cross-sectional schematic diagram illustrating an embodiment of the decorative material of the present invention.
Fig. 3 is a cross-sectional schematic diagram illustrating an embodiment of the decorative material of the present invention.
Fig. 4 is an outline view of a compression test device used in a compression test for decorative materials.
Fig. 5 (a-1, a-2) shows diamond indenters used in the measurement of Martens hardness in this specification; Fig. 5 (b) shows a schematic diagram of a press operation; and Fig. 5 (c) shows an example of a press load and displacement in the measurement of Martens hardness of the third layer.

### Description of Embodiments

The decorative material of present claim 1 comprises, on or above a base material layer, the first layer, the second layer, and the third layer made of synthetic resin in order from the base material layer side, and satisfies the condition of H1<H2<H3 wherein H1 is the hardness of the first layer, H2 is the hardness of the second layer, and H3 is the hardness of the third layer.

The decorative material of the present invention having the above features ensures excellent comfort (walking feel, sitting comfort, etc.) as well as scratch resistance when used as a decorative material for floors. The decorative material of the present invention can be suitably used as both an interior material or an exterior material of a decorative material for floors.

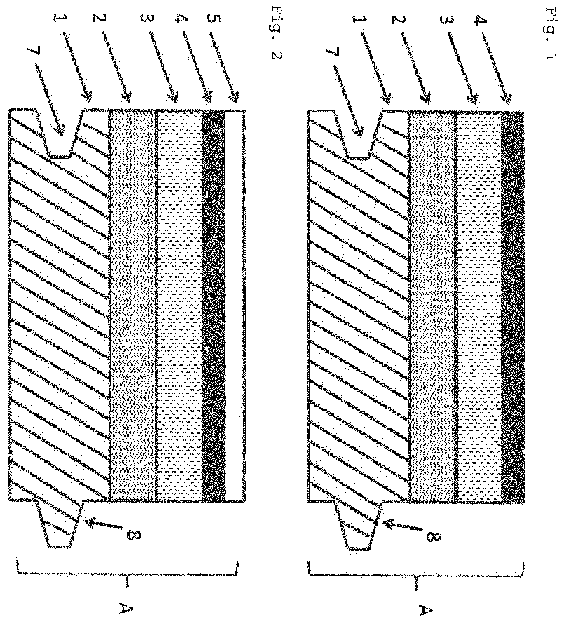

Each layer constituting the decorative material of the present invention is explained below with reference to Figs. 1 to 3.

Figs. 1 to 3 show embodiments of the decorative material of the present invention, but the present invention is not limited to these embodiments. Hereinbelow, the direction or side where the first layer etc. is disposed, as viewed from the base material 1, is referred to as "on" or "the front surface," whereas the side opposite the direction or side where the first layer etc. is disposed, as viewed from the base material 1, is referred to as "under" or "the back surface."

Regarding numerical ranges, except for portions clearly indicating "or more" and "or less," those defined by "A to B" means "A or more" and "B or less." For example, 2 to 15 mm means 2 mm or more and 15 mm or less.

### Base material layer 1

Although the base material layer 1 is not limited, at least one member selected from the group consisting of medium-density wood fiberboard (MDF), high-density wood fiberboard (HDF), particleboard (PB), coniferous tree plywood, broadleaf tree plywood, fast-growing tree plywood, and resin plates (polyvinyl chloride (PVC), polypropylene (PP), polyethylene (PE), etc.) can be used.

Herein, examples of coniferous trees include Sakhalin fir, Japanese larch, Yezo spruce, Japanese cedar, hinoki cypress, pine, sequoia, Hondo spruce, and the like. Examples of broadleaf trees include lauan, Japanese linden, birch, castor aralia, Japanese beech, oak, meranti, and the like. Examples of fast-growing trees include poplar, falcata, acacia, Kamerere, eucalyptus, Terminalia, and the like.

When a plywood, such as a coniferous tree plywood, broadleaf tree plywood, or fast-growing plywood, is used, the number of stacked plywood layers (number of plies) is not limited. It is usually preferable that the number of plies be 3 to 7, and more preferably 5 to 7. The adhesive used at the time of producing plywood is not limited. Known woodworking adhesives may be widely used. Examples of adhesives include adhesives containing, as an active ingredient, polyvinyl acetate, polyvinyl chloride, vinyl chloride-vinyl acetate copolymers, ethylene-acrylic acid copolymers, ionomers, butadiene-acrylic nitrile rubber, neoprene rubber, natural rubber, or the like. Additionally, examples of heat-curable adhesives include melamine-based adhesives, phenol-based adhesives, urea-based (vinyl acetate-urea-based) adhesives, and the like.

The thickness of the base material layer 1 is not limited. The thickness is preferably about 2 to 15 mm, and more preferably about 2 to 12 mm.

### First layer, second layer, and third layer

Although the details are described below, the first layer preferably has a thickness of about 0.5 to 3.0 mm and a hardness of about 0.1 to 5 N/mm². The second layer preferably has a thickness of about 0.5 to 3.0 mm and a hardness of about 1 to 50 N/mm². The third layer preferably has a thickness of about 0.1 to 1.0 mm and a hardness of about 20 to 250 N/mm². The hardness of each layer in the present invention is measured by the Martens hardness measuring method described below.

In this specification, the Martens hardness of each layer is a measurement value obtained using a surface film physical property tester (PICODENTOR HM-500, a product of Fischer Instruments). The specific measurement method is as follows.

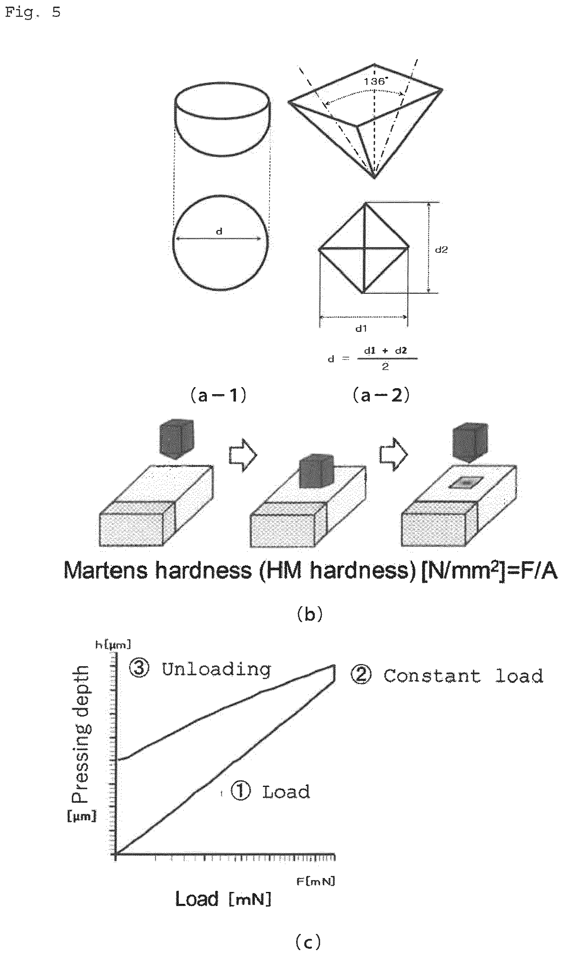

As for the first layer and the second layer, a bowl-like diamond indenter (diameter (d) = 0.4 mm) shown in Fig. 5 (a-1) is pressed into each measurement sample as shown in Fig. 5 (b). The surface area A (mm²) is calculated from the length of the diameter of a bowl-like dent formed on the surface, and test load F (N) is divided by the surface area A to thereby determine the hardness.

The pressing conditions are as follows. The pressing speed is made constant ((√(F [N]))/t [sec.] = 0.01 [mm/sec.] at room temperature (laboratory environmental temperature). First, the diamond indenter is pressed into a depth of 0 to 120 µm, maintained at a depth of 120 µm for 5 seconds, and then unloading is performed at the same speed as the pressing speed. The hardness determined by F/A, wherein A is surface area and F is test load, is the Martens hardness mentioned above.

On the other hand, as for the third layer, a quadrangular pyramid diamond indenter shown in Fig. 5 (a-2) is pressed into a measuring sample as shown in Fig. 5 (b). The surface area A (mm²) is calculated from the length of the diagonal lines of a quadrangular pyramidal (pyramidal) dent formed on the surface, and the test load F (N) is divided by the surface area A to thereby determine the hardness.

The pressing conditions are as follows. First, a 0- to 300-mN load is applied for 10 seconds at room temperature (laboratory environmental temperature), as shown in the conceptual diagram of Fig. 5(c). Next, a 300-mN load is maintained for 5 seconds. Finally, unloading is performed from 300 to 0 mN for 10 seconds. The hardness determined by F/A, wherein A is surface area and F is test load, is the Martens hardness mentioned above.

In this specification, in order to avoid the influence of the hardness of layers other than the measurement subject, the Martens hardness of the cross-section of each layer was measured. For this measurement, each layer was embedded in a resin (cold-curing-type epoxy two-component curable resin) and cured by allowing it to stand at room temperature for at least 24 hours. The cured embedded sample was then mechanically polished to expose the cross-section of each layer, and a diamond indenter was pressed into the cross-section to thereby measure the Martens hardness of the cross-section.

### First layer (numeral 2 in Figs. 1 to 3)

The first layer has the lowest hardness among the three layers (the first, second, and third layers). The hardness is about 0.1 to 5 N/mm², and preferably about 0.1 to 2 N/mm².

The first layer may be a foamed resin layer (including a foamed adhesive layer), elastomer layer, or the like.

Resin components (including the case of rubber) contained in the foamed resin layer are not limited. Examples include polypropylene (PP), polyethylene (PE), ethylene-propylene copolymer, acryl, ethylene-methacrylic acid copolymer (EMMA), ethylene-vinyl acetate copolymer (EVA), ethylene-acrylic acid copolymer, polyurethane, polyvinyl acetate, polyvinyl chloride, vinyl chloride-vinyl acetate copolymer, polymethylene, polymethylpentene, polyethylene terephthalate (PET), polybutylene terephthalate, polycarbonate, polyarylate, polyimide, polystyrene, polyamide, ABS, butadiene-acrylic nitrile rubber, neoprene rubber, natural rubber, ionomer, etc. Such resin components can be used singly or in a combination of two or more. Among these, polyethylene (PE), ethylene-vinyl acetate copolymer (EVA), etc. are preferable.

Examples of foaming agents include inorganic foaming agents, such as sodium bicarbonate, sodium carbonate, ammonium bicarbonate, ammonium carbonate, and ammonium nitrite; nitroso compounds, such as *N*,*N*'-dimethyl-*N*,*N*'-dinitrosoterephthalamide, and *N*,*N*'-dinitrosopentamethylenetetramine; azo compounds, such as azodicarbonamide, azobisformamide, azobisisobutyronitrile, azocyclohexylnitrile, azodiaminobenzene, and barium azodicarboxylate; sulfonyl hydrazide compounds, such as benzenesulfonyl hydrazide, toluenesulfonyl hydrazide, p,p'-oxybis(benzenesulfonyl hydrazide), and diphenylsulfone-3,3'-disulfonylhydrazide; azide compounds, such as calcium azide, 4,4'-diphenyldisulfonylazide, and p-toluenesulfonyl azide; and the like. Among these, thermal decomposition-type foaming agents are preferable.

The content of the foaming agent can be suitably selected depending on the type of the foaming agent, expansion ratio, etc. When a thermal decomposition-type foaming agent is used, foaming can be conducted by heating. The heating conditions are not limited as long as a desired foamed resin layer can be formed by the decomposition of a thermal decomposition-type foaming agent.

The foamed resin layer is preferably made of closed-cell foam rather than open-cell foam. Although the embodiment using the foaming agent is described above, a method for obtaining a foamed resin layer having closed-cell foam without using a foaming agent is known, for example, a supercritical foaming technique etc. In the present invention, the foamed resin layer may be formed by such a foaming technique without using a foaming agent.

Additionally, the foamed resin layer can sometimes serve as a foamed adhesive layer depending on the kind of resin component. In this case, the first layer can be used as an adhesive layer.

### Second layer (numeral 3 in Figs. 1 to 3)

The second layer has a medium hardness among the three layers (the first, second, and third layers). The hardness is about 1 to 50 N/mm² and is preferably about 1.5 to 30 N/mm².

The second layer is a cork material layer. As the cork material, any of so-called natural cork and synthetic cork can be used. Natural cork is a highly elastic material produced by peeling and processing the phellem of cork oak bark. Synthetic cork is produced by imitating natural cork.

Among these, the second layer is preferably a cork material layer.

### Third layer (numeral 4 in Figs. 1 to 3)

The third layer is made of synthetic resin and has the highest hardness among the three layers (the first, second, and third layers). The hardness is about 20 to 250 N/mm² and preferably about 50 to 250 N/mm².

The third layer is a synthetic resin layer provided on the back surface of a decorative layer 5, which is described below.

Examples of resin components of the backer layer (synthetic resin layer) include polyolefin-based resins, such as polyethylene (high-density polyethylene, medium-density polyethylene, low-density polyethylene) and polypropylene. These can be used singly or in a combination of two or more. Examples of polypropylene include homopolypropylene, random polypropylene, block polypropylene, and the like.

Examples of resin components other than polyolefin-based resins include vinyl chloride resin, polystyrene, polyamide resin, polyimide resin, polyamideimide resin, fluororesin, urethane resin, polysulfone, polycarbonate, polyacetal, polyphenylene ether, methacrylic resin, acrylonitrile-styrene resin, acrylonitrile-butadiene-styrene resin, polyethylene naphthalate (PEN), polyethylene terephthalate (PET), polybutylene terephthalate (PBT), polyarylate, amorphous polyethylene terephthalate (so-called A-PET) (a product of Mitsubishi Chemical Corporation: Novaclear (trade name)), a polyethylene terephthalate copolymer (PETG), and the like.

The amount of the resin component in the synthetic resin layer is preferably 90 to 100 mass%, and more preferably 95 to 100 mass%. To reinforce the synthetic resin layer, wood powder or the like can be incorporated in addition to the resin component.

The synthetic resin layer may be formed by laminating the resin composition comprising the resin component or the like on the second layer, for example, by calendering, inflation molding, T-die extrusion, or like methods; or on the back surface of the base material sheet forming the decorative sheet, which is used as a decorative layer 5 described below. A known film may also be used as the synthetic resin layer.

### Decorative layer 5

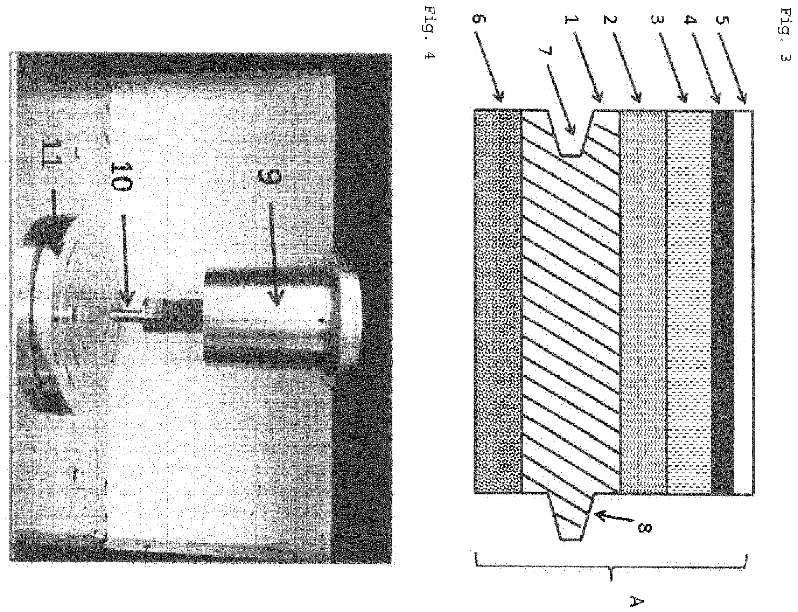

The decorative material of the present invention may comprise a decorative layer 5. The decorative layer 5 is not limited as long as it provides designability with the decorative material of the present invention. The decorative layer can be selected from a wide variety of materials, such as decorative sheets (including those in which a base material sheet is a resin film, paper, resin impregnated paper, or the like), sliced veneers, decorative layers formed by transfer, etc. Further, the position of the decorative layer 5 in the decorative material is not limited. It is preferable that the decorative layer is usually disposed at the uppermost surface, as shown in Figs. 2 and 3.

Although the thickness of the decorative layer 5 is not limited, it is preferably about 20 to 250 µm, and more preferably about 50 to 200 µm.

A preferable embodiment of the decorative sheet is, for example, a sheet configured such that at least a picture pattern layer, an adhesive layer, a transparent resin layer, and a transparent surface-protecting layer are disposed on a base material sheet, with the transparent surface-protecting layer being the uppermost surface layer. The uppermost surface layer of the decorative sheet may have a concave-convex pattern formed by embossing.

Each layer of the decorative sheet is described below as a representative example of the decorative layer 5.

### Base material sheet

A picture pattern layer etc. are sequentially laminated on the surface (front surface) of the base material sheet.

Examples of base material sheets include resin films, paper, resin impregnated paper, and the like. Among the resin films, those formed using thermoplastic resins are preferable. Specific examples include polyvinyl chloride, polyethylene terephthalate, polybutylene terephthalate, polyamide, polyethylene, polypropylene, polycarbonate, polyethylene naphthalate, ethylene-vinyl acetate copolymers, ethylene-acrylic acid copolymers, ethylene-acrylic ester copolymers, ionomers, acrylic acid esters, methacrylic acid esters, and the like. Among these, polypropylene or like polyolefins are preferable.

The base material sheet may be colored. For example, colorants (pigments or dyes) may be added to thermoplastic resins for coloring. Examples of usable colorants include inorganic pigments, such as titanium dioxide, carbon black, and iron oxide; organic pigments, such as phthalocyanine blue; and various dyes. One or two or more such colorants may be selected. The amount of colorants may be selected according to the desired color etc.

The base material sheet may contain, as needed, various kinds of additives, such as fillers, matting agents, foaming agents, flame retardants, lubricants, antistatic agents, antioxidants, ultraviolet absorbers, and light stabilizers.

The thickness of the base material sheet can be suitably selected according to the purpose of use, application method, etc., of the final product. In general, the base material sheet preferably has a thickness of 50 to 250 µm.

The surface (front surface) of the base material sheet may be subjected to a corona discharge treatment in order to enhance the adhesiveness of inks that form a picture pattern layer. The corona discharge treatment method and the conditions therefor may be performed according to known methods. The back surface of the base material sheet may be subjected to a corona discharge treatment, or a picture pattern layer (a so-called back print), back-surface primer layer, backer layer, or the like may be formed, as needed.

### Picture pattern layer (picture layer)

The picture layer imparts a desired picture (design) to the decorative sheet, and the kind etc. of the picture is not limited. Examples include wood grain patterns, marble grain patterns, pebbly patterns, tiled patterns, brick-masonry patterns, textile patterns, leather patterns, geometric figures, characters, symbols, abstraction patterns, and the like.

The method of forming a picture layer is not limited. For example, the picture layer may be formed on the front surface of a base material sheet by a printing method using ink obtained by dissolving (or dispersing) a known colorant (dye or pigment) together with a binding resin in a solvent (or a dispersion medium).

Examples of colorants include inorganic pigments, such as carbon black, titanium white, zinc oxide, red iron oxide, Berlin blue, and cadmium red; organic pigments, such as azo pigments, lake pigments, anthraquinone pigments, quinacridone pigments, phthalocyanine pigments, isoindolinone pigments, and dioxazine pigments; metallic powder pigments, such as aluminum powder and bronze powder; pearlescent pigments, such as titanium oxide-coated mica and bismuth chloride oxide; fluorescent pigments; noctilucent pigments; and the like. Such colorants may be used singly or in a combination of two or more. These colorants may further contain a filler such as silica, an extender pigment such as organic beads, a neutralizer, a surfactant, or the like.

Examples of binding resins include polyester-based urethane resins, hydrophilized polyester-based urethane resins, and the like, which can be used in combination with polyesters, polyacrylates, polyvinyl acetate, polybutadiene, polyvinyl chloride, chlorinated polypropylene, polyethylene, polystyrene, polystyrene-acrylate copolymers, rosin derivatives, alcohol adducts of styrene-maleic anhydride copolymers, cellulose-based resins, and the like.

Specific examples of usable binding resins include polyurethane-polyacrylic-based resins, polyacrylamide-based resins, poly(meth)acrylate-based resins, polyethylene oxide-based resins, poly N-vinyl-pyrrolidone-based resins, water-soluble polyester-based resins, water-soluble polyamide-based resins, water-soluble amino-based resins, water-soluble phenolic resins, and other water-soluble synthetic resins; water-soluble natural polymers, such as polynucleotides, polypeptides, and polysaccharides; and the like. Other examples include natural rubber, synthetic rubber, polyvinyl acetate-based resins, (meth)acrylic acid based-resins, polyvinyl chloride-based resins, modified or mixed polyurethane-polyacrylic-based resins, and other resins. Such binding resins may be used singly or in a combination of two or more.

Examples of printing methods for forming the picture layer include gravure printing, offset printing, screen printing, flexo printing, electrostatic printing, ink jet printing, and the like. When a solid-like picture pattern layer (also referred to as a color-concealing layer) is formed over the entire surface, various coating methods, such as gravure coating, reverse gravure coating, roll coating, knife coating, air knife coating, dye coating, lip coating, comma coating, kiss coating, flow coating, and dip coating, can be used.

In addition to the above, examples of usable methods include hand-drawing methods, marbling methods, photographic methods, transfer methods, laser beam drawing methods, electron beam drawing methods, metal partial deposition methods, etching methods, and the like. Such methods may be used in combination with other methods.

The thickness of the picture layer is not limited, and can be appropriately selected according to the characteristics of the product. The layer thickness when applied may be about 1 to 15 µm, and the layer thickness when dried may be about 0.1 to 10 µm.

### Adhesive layer

An adhesive layer is provided between the picture layer and a transparent resin layer. The adhesive contained in the adhesive layer may be suitably selected according to, for example, the components of the picture layer or the transparent resin layer. For example, various adhesives containing polyurethane-based resins, polyacrylic resins, polycarbonate-based resins, epoxy-based resins, or the like can be used. Not only reaction-curable adhesives but also hot melt adhesives, ionizing radiation-curable adhesives, ultraviolet-curable adhesives, and like adhesives are usable.

The adhesive layer may be transparent or translucent, as long as the picture layer can be recognized.

In the present invention, an adhesive surface may be subjected to a known easy-adhesion treatment, such as corona discharge treatment, plasma treatment, degreasing treatment, or surface roughening treatment, as needed.

The adhesive layer can be formed, for example, by applying an adhesive on a picture pattern layer, drying once, and then laminating a transparent resin. The method for application of the adhesive is not limited. For example, roll coating, curtain flow coating, wire bar coating, reverse coating, gravure coating, reverse gravure coating, air knife coating, kiss coating, blade coating, smooth coating, comma coating, and the like can be used.

The thickness of the adhesive layer varies depending on, for example, the kinds of transparent protecting layer and adhesive used, but may usually be about 0.1 to 30 µm.

### Transparent resin layer

The transparent resin layer may be colored as long as it is transparent, or may be translucent so far as the picture pattern layer can be observed.

Examples of the usable resins include polyvinyl chloride, polyethylene terephthalate, polybutylene terephthalate, polyamide, polyethylene, polypropylene, ethylene-vinyl acetate copolymers, ethylene-acrylic acid copolymers, ethylene-acrylic ester copolymers, ionomers, polymethylpentene, acrylic acid esters, methacrylic acid esters, polycarbonate, cellulose triacetate, and the like. Among these, polypropylene or like polyolefin-based resins are preferable, and polyolefin-based resins having stereoregularity are more preferable. When polyolefin-based resins are used, it is desirable that the transparent resin layer be formed by extruding a molten polyolefin-based resin.

The transparent resin layer may contain, as needed, various kinds of additives, such as fillers, matting agents, foaming agents, flame retardants, lubricants, antistatic agents, antioxidants, ultraviolet absorbers, light stabilizers, radical scavengers, and soft components (e.g., rubber).

The thickness of the transparent resin layer is not limited. The thickness may usually be about 10 to 400 µm.

### Transparent surface-protecting layer

A transparent surface-protecting layer is formed on the transparent resin layer. The transparent surface-protecting layer preferably contains an ionizing radiation-curable resin or a two-component curable urethane-based resin as a resin component, although this is not limitative. It is preferable that the transparent surface-protecting layer be substantially formed of these resins. When the transparent surface-protecting layer is formed using an ionizing radiation-curable resin or a two-component curable urethane-based resin, the abrasion resistance, impact resistance, stain resistance, scratch resistance, weather resistance, etc., of the decorative sheet can be easily enhanced. In the present invention, it is particularly preferable that the uppermost layer be an ionizing radiation-curable resin layer.

The ionizing radiation-curable resin is not limited. Examples of usable ionizing radiation-curable resins include transparent resins comprising, as a main component, a prepolymer (including an oligomer) and/or a monomer containing, in the molecule, a radically polymerizable double bond that can undergo a crosslinking polymerization reaction by ionizing radiation, such as irradiation with ultraviolet rays or electron beams. Such prepolymers or monomers can be used singly or in a combination of two or more. The curing reaction is usually a crosslinking curing reaction.

Specific examples of such prepolymers or monomers include compounds that contain, in the molecule, a radically polymerizable unsaturated group, such as a (meth)acryloyl group or a (meth)acryloyloxy group; and a cation-polymerizable functional group, such as an epoxy group. Polyene/thiol-based prepolymers comprising polyene and polythiol in combination are also preferable. In this specification, a (meth)acryloyl group means an acryloyl group or a methacryloyl group.

Examples of prepolymers comprising a radically polymerizable unsaturated group include polyester (meth)acrylate, urethane (meth)acrylate, epoxy (meth)acrylate, melamine (meth)acrylate, triazine (meth)acrylate, silicone (meth)acrylate, and the like. It is usually preferable that such prepolymers have a molecular weight of about 250 to 100,000.

Examples of monomers comprising a radically polymerizable unsaturated group include monofunctional monomers, such as methyl (meth)acrylate, 2-ethylhexyl (meth)acrylate, and phenoxyethyl (meth)acrylate. Examples of multifunctional monomers include diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, dipentaerythritol hexa(meth)acrylate, and the like.

Examples of prepolymers comprising a cation-polymerizable functional group include prepolymers of epoxy-based resins, such as bisphenol-type epoxy resins and novolac-type epoxy compounds; and prepolymers of vinyl ether-based resins, such as fatty acid-based vinyl ethers and aromatic vinyl ethers. Examples of thiols include polythiols, such as trimethylolpropane trithioglycolate and pentaerythritol tetrathioglycolate. Examples of polyenes include polyurethanes from diol and diisocyanate, wherein allyl alcohol is added to each end thereof.

Electromagnetic waves or charged particles having energy high enough to cause the curing reaction of molecules of ionizing radiation-curable resin (composition) are used as the ionizing radiation to cure the ionizing radiation-curable resin. Ultraviolet rays or electron beams may usually be used. Visible light, X-rays, ionic rays, or the like may also be used.

Examples of ultraviolet ray sources include light sources, such as ultra-high-pressure mercury lamps, high-pressure mercury lamps, low-pressure mercury lamps, carbon arc lamps, black lights, and metal halide lamps. It is usually preferable that the ultraviolet rays have a wavelength of 190 to 380 nm.

Examples of electron beam sources include various electron beam accelerators, such as a Cockcroft-Walton accelerator, Van de Graaff accelerator, resonance transformer accelerators, insulation-core-transformer-type accelerators, linear accelerators, dynamitron accelerators, and high-frequency accelerators. Among these, electron beam sources capable of irradiating electrons having an energy of 100 to 1000 keV, and preferably 100 to 300 keV, are preferable.

The two-component curable urethane-based resins are not limited. Examples of usable resins include those comprising a polyol component (e.g., acrylic polyol, polyester polyol, polyether polyol, epoxy polyol, etc.) having an OH group as a main compound, and an isocyanate component (e.g., tolylene diisocyanate, hexamethylene diisocyanate, metaxylene diisocyanate, etc.), which is a curing agent component.

The transparent surface-protecting layer may contain, as needed, plasticizers, stabilizers, fillers, dispersants, colorants, such as dyes and pigments, solvents, and the like.

The transparent surface-protecting layer can be formed, for example, by applying an ionizing radiation-curable resin or a two-component curable urethane-based resin to a transparent resin layer by a known coating method, such as gravure coating or roll coating, and then curing the resin. When an ionizing radiation-curable resin is used, the resin is cured by irradiating electron beams.

The thickness of the transparent surface-protecting layer is not limited and can be appropriately selected according to the characteristics of the final product. The thickness is usually about 0.1 to 50 µm, and preferably about 1 to 20 µm.

### Embossing

A decorative sheet may be embossed from the transparent surface-protecting layer side.

The embossing is conducted to impart a desired texture, such as wood grain patterns, to the decorative sheet. For example, after the transparent protecting layer is softened by heating, the softened transparent protecting layer is pressed and shaped by using an embossing plate having a desired concave-convex pattern, and the transparent protecting layer is then solidified by cooling to provide a texture. The embossing may be conducted using a known sheet-fed embossing machine or rotary embossing machine.

Examples of the concave-convex patterns applied by embossing include wood-grain vessel patterns, bosses (concave-convex patterns of annual rings that stand out), hairline patterns, grain patterns, mat patterns, and the like.

When embossing is applied, ink may be filled into the embossed concave portions by wiping as needed. For example, ink may be filled into the embossed concave portions while plowing the surface thereof with a doctor blade. Ink containing a two-component curable urethane resin as a binder can usually be used as the ink to be filled (wiping ink). In particular, when a wood-grain vessel-like concave-convex pattern is subjected to wiping, a design closer to actual wood grain can be attained, thus increasing the value of the product.

In the present invention, the transparent surface-protecting layer may contain other components. For example, solvents, ultraviolet absorbers, antioxidants, dispersants, photostabilizers, gloss-controlling agents, antiblocking agents, lubricants, and like additives may be added thereto.

### Production method and properties of the decorative material of the present invention

The decorative material of the present invention can be produced by laminating the base material layer 1, first layer, second layer, and third layer made of synthetic resin in this order, via an adhesive. The back surface of the base material layer 1 may further comprise a shock-absorbing layer. When the shock-absorbing layer is provided on the back surface of the base material layer 1, the influence of unevenness of the surface to which the decorative material is applied can be reduced or the effect of inhibiting generated sound (for example, inhibiting the tapping sound generated when the soles or heels of shoes hit a floor while walking wwith shoes can be increased. The base material layer 1, first layer, second layer, and third layer made of synthetic resin are the minimum layer structure (shown in Fig. 1) of the decorative material of the present invention. Other layers can be intermediated as needed, as long as the effect of the present invention is not impaired.

The thickness of the decorative material is 6 to 15 mm, and preferably 7 to 13 mm.

The adhesive is not limited, and examples include polyvinyl acetate, polyvinyl chloride, vinyl chloride-vinyl acetate copolymers, ethylene-acrylic acid copolymers, ionomers, butadiene-acrylonitrile rubber, neoprene rubber, natural rubber, and the like. These adhesives are used singly or in a combination of two or more. When the first layer is a foamed adhesive layer, another adhesive is not necessary because the foamed adhesive layer serves as an adhesive.

The decorative material of the present invention may comprise on its side surface a groove-like depression (depression 7 in Figs. 1 to 3) and projection (projection 8 in Figs. 1 to 3) that are formed in a manner such that they are fittable to each other. This configuration is called a tongue and groove joint ("*sane"* in Japanese).

In order for the decorative material of the present invention to efficiently attain the effect of inhibiting generated sound as well as the effects of scratch resistance and excellent comfort (walking feel, sitting comfort, etc.) when used as a decorative material for floors, the decorative material preferably has a displacement of 300 µm or more, and more preferably 400 µm or more, under a load of 100 N, when compressed by pressing thereinto a cylindrical jig with a diameter of 10 mm from above the decorative material at a constant speed using a compression test device. When the decorative material has such a level of displacement (softness), an effect of inhibiting generated sound can be easily attained in addition to comfort etc.

More specifically, a compression test device shown in Fig. 4 is prepared, and a decorative material, which is a measurement sample, is placed on a metal base 11. While the decorative material is compressed by pressing thereinto a cylindrical jig with a diameter of 10 mm (with the bottom surface of the cylindrical jig being parallel to the metal base 11) at a constant speed, the displacement under a load of 100 N is measured. In this measurement, the measurement sample is disposed on the metal base 11 in such a manner that the cylindrical jig comes into contact with the decorative sheet side.

The measuring apparatus and measurement conditions are as follows.
- Compression test device (a product of A&D Company, Limited, a compression tensile tester, model number: RTC-1250A, LOAD CELL: UR-1KN-D)
- Measurement sample shape: 4 cm by 4 cm
- Compression rate: 10 mm/min
- Cylindrical jig: a cylindrical tapering jig with a diameter of 10 mm

Such decorative materials of the present invention can be used, for example, for interior materials of buildings, such as floors, or exterior materials, such as balconies and verandas. In particular, the decorative material of the present invention can be suitably used as both an interior material or exterior material of a decorative material for floors.

### Examples

The present invention is specifically described below with reference to Examples and Comparative Examples. However, the present invention is not limited thereto.

### Examples 1 to 17 and Comparative Examples 1 to 6

A picture pattern layer was formed by gravure printing on a 60-µm-thick colored polypropylene film, which was a base material sheet.

Subsequently, an 80-µm-thick transparent polypropylene-based resin film, which was a transparent resin layer, was bonded to the picture pattern layer using a urethane-based dry lamination adhesive.

Subsequently, an electron beam-curable transparent surface-protecting layer was formed to a thickness of 15 µm on the transparent resin layer, thus producing a sheet with a thickness of 0.16 mm, thereby obtaining a decorative layer.

On the other hand, a particleboard having a thickness of 9 mm was prepared as a base material layer.

As shown in Table 1, the first layer, second layer, and third layer made of synthetic resin were laminated between the base material layer and the decorative layer. The adhesive used to bond the decorative layer was a urethane-based adhesive, and the adhesive used to bond other layers was a vinyl acetate-based adhesive. The vinyl acetate-based adhesive used herein was a vinyl acetate-based emulsion adhesive (7 g/900 cm², produced by Japan Coating Resin Co., Ltd.) The adhesive comprises components at a mass ratio of BA-10L (main agent):BA-11B (curing agent) = 100:2.5.

**Table 1-1**

| | | Example 1 | Example 2 | Example 3 | Example 4 |
|---|---|---|---|---|---|
| Decorative layer | Material | Polyolefin-based | Polyolefin-based | Polyolefin-based | Polyolefin-based |
| | Thickness (mm) | 0.16 | 0.16 | 0.16 | 0.16 |
| Third layer | Material | PP | PP | PP | PP |
| | Thickness (mm) | 0.25 | 0.25 | 0.4 | 0.1 |
| | Hardness (N/mm²) | 60 | 60 | 150 | 250 |
| Second layer | Material | Cork material | Cork material | Cork material | Cork material |
| | Thickness (mm) | 2.0 | 2.0 | 2.0 | 2.0 |
| | Hardness (N/mm²) | 5.0 | 2.0 | 5.0 | 5.0 |
| First layer | Material | Foamed EVA | Olefin-based Erastomer | Foamed EVA | Foamed EVA |
| | Thickness (mm) | 1.0 | 1.0 | 1.0 | 1.0 |
| | Hardness (N/mm²) | 0.25 | 1.50 | 0.25 | 0.25 |
| Base material layer | Material | Particleboard | Particleboard | Particleboard | Particleboard |
| | Thickness (mm) | 8.9 | 8.9 | 8.9 | 8.9 |
| Hardness test (maximum hardness) | | HB | 2B | H | HB |
| Comfort evaluation test | | +++ | +++ | +++ | +++ |
| Loading test (Displacement: µm) | | 840 | 385 | 755 | 870 |

**Table 1-2**

| | | Example 5 | Example 6 | Example 7 | Example 8 |
|---|---|---|---|---|---|
| Decorative layer | Material | Polyolefin-based | Polyolefin-based | Polyolefin-based | Polyolefin-based |
| | Thickness (mm) | 0.16 | 0.16 | 0.16 | 0.16 |
| Third layer | Material | PP | PP | PP | PP |
| | Thickness (mm) | 0.2 | 0.5 | 1.0 | 0.25 |
| | Hardness (N/mm²) | 20 | 220 | 20 | 60 |
| Second layer | Material | Cork material | Cork material | Cork material | Cork material |
| | Thickness (mm) | 2.0 | 2.0 | 2.0 | 0.8 |
| | Hardness (N/mm² ) | 5.0 | 5.0 | 5.0 | 43.0 |
| First layer | Material | Foamed EVA | Foamed EVA | Foamed EVA | Foamed EVA |
| | Thickness (mm) | 1.0 | 1.0 | 1.0 | 1.0 |
| | Hardness (N/mm²) | 0.25 | 0.25 | 0.25 | 0.25 |
| Base material layer | Material | Particleboard | Particleboard | Particleboard | Particleboard |
| | Thickness (mm) | 8.9 | 8.9 | 8.9 | 8.9 |
| Hardness test (maximum hardness) | | HB | HB | B | HB |
| Comfort evaluation test | | +++ | +++ | ++ | +++ |
| Loading test (Displacement: µm) | | 875 | 690 | 335 | 880 |

**Table 1-3**

| | | Example 9 | Example 10 | Example 11 | Example 12 |
|---|---|---|---|---|---|
| Decorative layer | Material | Polyolefin-based | Polyolefin-based | Polyolefin-based | Polyolefin-based |
| | Thickness (mm) | 0.16 | 0.16 | 0.16 | 0.16 |
| Third layer | Material | PP | PP | PP | PP |
| | Thickness (mm) | 0.25 | 0.25 | 0.25 | 0.25 |
| | Hardness (N/mm²) | 60 | 60 | 60 | 60 |
| Second layer | Material | Cork material | Cork material | Cork material | Cork material |
| | Thickness (mm) | 1.2 | 2.3 | 2.9 | 2.0 |
| | Hardness (N/mm²) | 13.0 | 27.0 | 11.0 | 5.0 |
| First layer | Material | Foamed EVA | Foamed EVA | Foamed EVA | Foamed EVA |
| | Thickness (mm) | 1.0 | 1.0 | 1.0 | 0.6 |
| | Hardness (N/mm²) | 0.25 | 0.25 | 0.25 | 1.5 |
| Base material layer | Material | Particleboard | Particleboard | Particleboard | Particleboard |
| | Thickness (mm) | 8.9 | 8.9 | 8.9 | 8.9 |
| Hardness test (maximum hardness) | | HB | HB | HB | HB |
| Comfort evaluation test | | +++ | +++ | +++ | ++ |
| Loading test (Displacement: µm) | | 840 | 700 | 675 | 470 |

**Table 1-4**

| | | Example 13 | Example 14 | Example 15 | Example 16 | Example 17 |
|---|---|---|---|---|---|---|
| Decorative layer | Material | polyolefin-based | polyolefin-based | polyolefin-based | polyolefin-based | polyolefin-based |
| | Thickness (mm) | 0.16 | 0.16 | 0.16 | 0.16 | 0.16 |
| Third layer | Material | PP | PP | PP | PP | PP |
| | Thickness (mm) | 0.25 | 0.25 | 0.25 | 0.25 | 0.25 |
| | Hardness (N/mm²) | 60 | 60 | 60 | 60 | 60 |
| Second layer | Material | Cork material | Cork material | Cork material | Cork material | Cork material |
| | Thickness (mm) | 2.0 | 2.0 | 2.0 | 2.0 | 2.0 |
| | Hardness (N/mm²) | 5.0 | 5.0 | 5.0 | 5.0 | 5.0 |
| First layer | Material | Foamed EVA | Foamed EVA | Foamed EVA | Foamed EVA | Foamed EVA |
| | Thickness (mm) | 0.8 | 1.8 | 2.6 | 1.0 | 1.0 |
| | Hardness (N/mm²) | 0.15 | 1.5 | 4.5 | 0.25 | 0.25 |
| Base material layer | Material | Particleboard | Particleboard | Particleboard | MDF | Coniferous tree plywood |
| | Thickness (mm) | 8.9 | 8.9 | 8.9 | 8.9 | 8.9 |
| Hardness test | | HB | 2B | B | HB | HB |
| Comfort evaluation test | | +++ | +++ | +++ | +++ | +++ |
| Loading test (Displacement: µm) | | 665 | 1480 | 2130 | 850 | 865 |

**Table 1-5**

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| Decorative layer | Material | polyolefin-based | polyolefin-based | polyolefin-based | polyolefin-based | polyolefin-based | polyolefin-based |
| | Thickness (mm) | 0.16 | 0.16 | 0.16 | 0.16 | 0.16 | 0.16 |
| Third layer | Material | PP | PP | PP | - | MDF | PP |
| | Thickness (mm) | 0.25 | 0.25 | 0.25 | - | 2.70 | 0.25 |
| | Hardness (N/mm²) | 60 | 60 | 60 | - | 23 | 60 |
| Second layer | Material | Cork material | Cork material | Cork material | Cork material | Cork material | Foamed EVA |
| | Thickness (mm) | 2.0 | 2.0 | 3.0 | 2.0 | - | 1.0 |
| | Hardness (N/mm²) | 2.0 | 2.0 | 1.5 | 2.0 | - | 0.25 |
| First layer | Material | - | PP | - | Foamed EVA | Foamed EVA | Cork material |
| | Thickness (mm) | - | 1.0 | - | 1.0 | 1.0 | 2.0 |
| | Hardness (N/mm²) | - | 50 | - | 0.12 | 0.12 | 2.0 |
| Base material layer | Material | Particleboard | Particleboard | Particleboard | Particleboard | Particleboard | Particleboard |
| | Thickness (mm) | 8.9 | 8.9 | 8.9 | 8.9 | 8.9 | 8.9 |
| Hardness test | | 2B | 2B | 2B | 6B | 2B | 4B |
| Comfort evaluation test | | + | ++ | ++ | +++ | - | +++ |
| Loading test (Displacement: µm) | | 116 | 122 | 280 | 1007 | 475 | 990 |

### Test Example 1

The decorative materials obtained in the Examples and Comparative Examples were subjected to the pencil hardness test, comfort evaluation test, and compression loading test.

### Pencil hardness test

The scratch resistance of each decorative material was evaluated using a pencil hardness tester. The test was performed in accordance with JIS K5600-5-4 (1999), except that the tester was set so as to apply a load of 750 g to the edge of each pencil, with the tester being disposed horizontally. Specifically, the test was performed using pencils with cores of 6B, 5B, 4B, 3B, 2B, B, HB, F, H, 2H, 3H, 4H, 5H and 6H in descending softness of core hardness.

The evaluation criteria for scratch resistance were as follows. The maximum hardness at which no scratches or dents were visible was investigated.

The maximum hardness of each decorative material is shown in the column titled "pencil hardness test" in Table 1.

When the maximum hardness was 2B or more, the decorative material was evaluated as having good scratch resistance.

### Comfort evaluation test

10 subjects were subjected to sensory evaluation regarding comfort using a questionnaire. Specifically, the subjects sat on the decorative materials of the Examples and Comparative Examples that were horizontally disposed, and the sensory evaluation of comfort that the subjects felt while sitting was conducted using a questionnaire. The evaluation criteria were as follows.
Comfort: 2 points
Slight comfort: 1 point
Normal: 0 points
Slight discomfort: -1 point
Discomfort: -2 points

Finally, each decorative material was evaluated according to the sum (total points) of the points of 10 subjects.

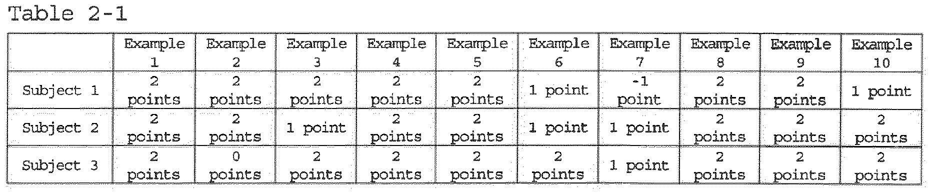

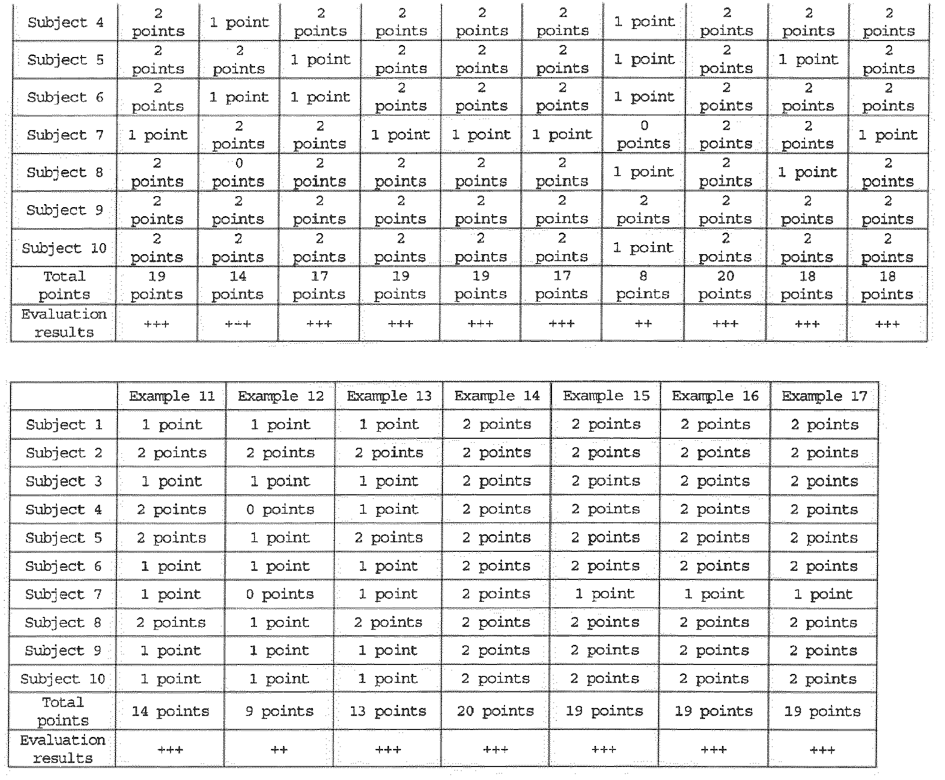

**Table 2-2**

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Subject 1 | 0 points | 0 points | 1 point | 2 points | -2 points | 2 points |
| Subject 2 | 1 point | 1 point | 2 points | 1 point | -1 point | 2 points |
| Subject 3 | 1 point | 1 point | 1 point | 2 points | 0 points | 2 points |
| Subject 4 | 0 points | 0 points | 0 points | 2 points | 0 points | 2 points |
| Subject 5 | 1 point | 1 point | 1 point | 1 point | -2 points | 2 points |
| Subject 6 | 1 point | 1 point | 1 point | 2 points | -2 points | 2 points |
| Subject 7 | 0 points | 0 points | 0 points | 2 points | 0 points | 2 points |
| Subject 8 | 1 point | 1 point | 1 point | 2 points | -2 points | 2 points |
| Subject 9 | 0 points | 1 point | 1 point | 2 points | 0 points | 2 points |
| Subject 10 | 0 points | 0 points | 0 points | 2 points | -1 point | 2 points |
| Total points | 5 points | 6 points | 8 points | 18 points | -10 point | 20 points |
| Evaluation results | + | ++ | ++ | +++ | - | +++ |

In Table 2, the meanings of the evaluation results are as follows.
+++ (The total points is 11 points or more.)
++ (The total points is 6 to 10 points.)
+ (The total points is 0 to 5 points.)
- (The total points is less than 0.)

### Compression loading test

Using a compression test device, a cylindrical jig with a diameter of 10 mm was pressed at a constant speed from above the decorative material. The displacement under a load of 100 N when the decorative material was compressed was measured. The measurement value is preferably 300 µm or more. Table 1 shows the results of displacement.

### Description of the Reference Numerals

- A.: Decorative material
- 1.: Base material layer
- 2.: First layer
- 3.: Second layer
- 4.: Third layer
- 5.: Decorative layer
- 6.: Shock-absorbing layer
- 7.: Depression
- 8.: Projection
- 9.: Stress-measuring part
- 10.: Cylindrical jig
- 11.: Metal base

## Claims

1. A decorative material comprising, on or above a base material layer, a first layer, a second layer, and a third layer made of synthetic resin in order from the base material layer side, wherein the second layer is a cork material layer,
the decorative material satisfying the condition of H1<H2<H3 wherein H1 is the hardness of the first layer, H2 is the hardness of the second layer, and H3 is the hardness of the third layer,
the decorative material has a thickness of 6 to 15 mm, and
wherein the decorative material has a displacement of 300 µm or more under a load of 100 N when a compression test device which is a product of A&D Company, Limited, a compression tensile tester, model number: RTC-1250A, LOAD CELL: UR-1 KN-D is used; and a decorative material having a length: 4 cm x width: 4 cm, which is a measurement sample, is disposed on a metal base of the compression test device;
and a cylindrical jig with a diameter of 10 mm with the bottom surface of the cylindrical jig being parallel to the metal base is pressed at a compression speed of 10 mm/min, thereby compressing the decorative material; the measurement sample is disposed on the metal base in such a manner that the cylindrical jig comes into contact with the decorative sheet side.

2. The decorative material according to claim 1, wherein the first layer is a foamed resin layer.

3. The decorative material according to claim 1 or 2, which further comprises a shock-absorbing layer under the base material layer.

4. The decorative material according to any one of claims 1 to 3, which is a decorative material for floors.

## Patentansprüche

1. Ziermaterial, das auf oder über einer Grundmaterialschicht eine erste Schicht, eine zweite Schicht und eine dritte Schicht aus Kunstharz in dieser Reihenfolge von der Seite der Grundmaterialschicht her umfasst, wobei die zweite Schicht eine Korkmaterialschicht ist,
das Ziermaterial die Bedingung H1<H2<H3 erfüllt, wobei H1 die Härte der ersten Schicht ist, H2 die Härte der zweiten Schicht ist und H3 die Härte der dritten Schicht ist,
das Ziermaterial eine Dicke von 6 bis 15 mm hat, und
wobei das Ziermaterial eine Verschiebung von 300 µm oder mehr unter einer Last von 100 N aufweist, wenn eine Druckprüfvorrichtung, die ein Produkt der A&D Company, Limited, ist, ein Druck-Zugprüfgerät, Modellnummer: RTC-1250A, LOAD CELL: UR-1KN-D verwendet wird; und ein Ziermaterial mit einer Länge: 4 cm x Breite: 4 cm, das eine Messprobe ist, auf einer Metallgrundplatte der Druckprüfvorrichtung angeordnet wird; und eine zylindrische Spannvorrichtung mit einem Durchmesser von 10 mm, wobei die Bodenfläche der zylindrischen Spannvorrichtung parallel zu der Metallgrundplatte ist, mit einer Druckgeschwindigkeit von 10 mm/min gepresst wird, wodurch das Ziermaterial komprimiert wird; wobei die Messprobe auf der Metallgrundplatte in einer solchen Weise angeordnet wird, dass die zylindrische Spannvorrichtung in Kontakt mit der Seite des Zierblattes kommt.

2. Ziermaterial nach Anspruch 1, wobei die erste Schicht eine geschäumte Harzschicht ist.

3. Ziermaterial nach Anspruch 1 oder 2, das zusätzlich eine stoßabsorbierende Schicht unter der Grundmaterialschicht aufweist.

4. Ziermaterial nach einem der Ansprüche 1 bis 3, das ein Ziermaterial für Fußböden ist.

## Revendications

1. Matériau décoratif comprenant, sur ou au-dessus d'une couche de matériau de base, une première couche, une deuxième couche et une troisième couche faites de résine synthétique dans l'ordre du côté de la couche de matériau de base, dans lequel la deuxième couche est une couche de matériau de liège,
le matériau décoratif satisfaisant la condition H1<H2<H3 dans laquelle H1 est la dureté de la première couche : H2 est la dureté de la deuxième couche, et H3 est la dureté de la troisième couche,
le matériau décoratif a une épaisseur de 6 à 15 mm, et
dans lequel le matériau décoratif a un déplacement de 300 µm ou plus sous une charge de 100 N lorsqu'un dispositif de test de compression qui est un produit de A&D Company, Limited, un testeur de traction par compression, numéro de modèle : RTC-1250A, CELLULE DE CHARGE : UR-KN-D est utilisé ; et un matériau décoratif ayant une longueur : 4 cm x largeur : 4 cm, qui est un échantillon de mesure, est disposé sur une base métallique du dispositif de test de compression ;
et un gabarit cylindrique ayant un diamètre de 10 mm, la surface inférieure du gabarit cylindrique étant parallèle à la base métallique, est pressé à une vitesse de compression de 10 mm/min, comprimant ainsi le matériau décoratif; l'échantillon de mesure est disposé sur la base métallique de telle manière que le gabarit cylindrique entre en contact avec le côté de la feuille décorative.

2. Matériau décoratif selon la revendication 1, dans lequel la première couche est une couche de résine expansée.

3. Matériau décoratif selon la revendication 1 ou 2, qui comprend en outre une couche d'absorption des chocs sous la couche de matériau de base.

4. Matériau décoratif selon l'une quelconque des revendications 1 à 3, qui est un matériau décoratif pour sols.
